# EUROPEAN PATENT APPLICATION

(11) **EP 4 177 299 A1**
(43) Date of publication of application: **10.05.2023**
(21) Application number: 22203708.7
(22) Date of filing: 26.10.2022
(51) Int. Cl.: C08J 9/30, C04B 24/12, C04B 28/14

(54) **FOAMING AGENT COMPOSITION, MANUFACTURING METHOD OF SUCH COMPOSITION AND USE OF THE COMPOSITON**

(30) Priority: 03.11.2021 PL 43941321
(71) Applicant: PPC Exol Spolka Akcyjna, 56-120 Brzeg Dolny (PL)
(72) Inventor: BRANDYS, Rafal, 51-114 Wroclaw (PL)
(74) Representative: AOMB Polska Sp. z.o.o.

(57) **Abstract**

The invention relates to a foaming agent composition comprising at least one surface-active agent, at least one glycol or a compound of the ether glycol family and at least one block copolymer comprising ethylene oxygen and propylene oxide units, a method of manufacturing such a composition and its use. Due to its properties, the composition according to the invention is particularly useful for aerating gypsum-based products such as plasterboards.

## Description

### Field of the Invention

The invention relates to a foaming agent composition comprising at least one surface-active agent, at least one glycol and at least one block copolymer comprising ethylene oxygen and propylene oxide units, a method of manufacturing such a composition and its use. Due to its properties, the composition according to the invention is particularly useful for aerating gypsum-based products such as plasterboards.

### Prior Art

Standard plasterboard (also referred to as plaster-cardboard panel or gypsum-cardboard panel) consists of a gypsum core and a cardboard covering. The board production process requires the use of chemical additives to facilitate processing and to modify properties of gypsum, i.e. foaming agents, plasticisers or setting retarders. Foaming agents are extremely important in the process. These are mainly mixtures of surface-active agents (surfactants) intended to reduce the weight of the board by reducing the dosage of gypsum. This is achieved through the introduction of foam which leaves empty small pores once the plaster is set. This represents a huge advantage both for the manufacturer - a cheaper production process - and for the final user - less load on building structures. For decades, foaming agents have been based solely on classic resin soaps and, over time, have been displaced in favour of alkyl sulphates (AS) and alkyl ether sulphates (AES), which improved the efficiency of the process.

Currently, there are three groups of foaming agents on the European market:
- products based on stable foam technology - forming small, evenly distributed pores in the plasterboard core. These products are still the most commonly used agents for industrial aeration of plasterboards;
- products based on unstable foam technology - forming large, irregular pores in the plasterboard core. These products represent a modern approach to the aeration of plasterboards,
- products based on semi-stable foam technology - created by mixing the two types of products above.

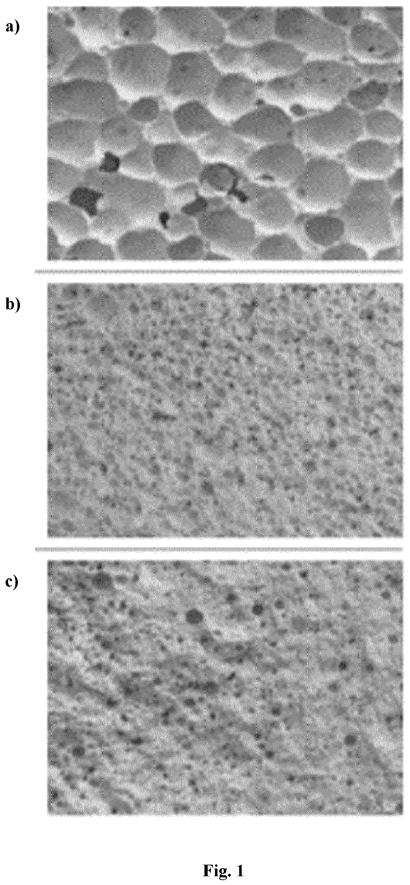

The pore structure in the gypsum core obtained with these three types of products is shown in Figure 1. Among the above products, the highest weight reduction of the panel and the most favourable mechanical parameters are obtained with semi-stable foam technology. The large pores formed significantly reduce the weight of the plasterboard and coexist with smaller pores that fill the spaces between the large pores. However, such a process requires at least two foam generators and separate lines for injecting both types of foam. Such a technology requires extensive research facilities allowing the dosage to be tailored to the individual requirements of plasterboards. This constitutes a major challenge, especially for smaller plasterboard manufacturers who, without the appropriate infrastructure and technical support, do not have the capacity to manufacture the top quality products expected by their customers.

Foaming agent compositions are also disclosed in the prior art.

United States Patent US5466393 relates to a formulation of a foaming agent dedicated to the aeration of gypsum. A composition of an anionic agent with the addition of various glycols is claimed in this patent.

Patent application US200440092676A1 relates to a two-component formulation of a foaming agent with the addition of NSF (polycondensate of salts of naphthalenesulfonic acids with formaldehyde). In this mixture, an anionic agent in the form of AES or AS is the one responsible for the foam-forming part. Such a composition is used in the dispersion, plasticisation and simple aeration of gypsum in stable foam technology and allows to obtain small pores.

Patent application EP0640384A1 relates to a formulation of a foaming agent and glycol dedicated to the aeration of gypsum. The patent lacks an additive that regulates pore structure of the foam, e.g. by adding a block copolymer.

Patent application US20160031761A1 relates to a mixture of surface-active agents including, but not limited to, anionic agents such as AES, AS and their mixtures and amphoteric products - betaines. The composition according to this invention is used in the aeration of gypsum in stable foam technology.

In the light of the above information, it is clear that there was a need in the prior art to develop a foaming agent composition providing optimum properties of plasterboard, i.e. the right weight and mechanical parameters, and which could be produced and used with a simple production line - without the need to implement additional devices, for example two foam generators and separate lines for injecting different types of foam into the gypsum-based products.

It was unexpectedly found that all these needs, and many others, are met by the composition according to the present invention.

### Summary of the Invention

The object of the invention is a foaming agent composition comprising at least one surface-active agent, at least one glycol and at least one block copolymer comprising ethylene oxygen and propylene oxide units. The essence of the invention is that the composition comprises:
at least one surface-active agent in an amount ranging from 40 to 75% by weight of the total weight of the composition, selected from the group comprising anionic surface-active agents of Formula 1:

   **R_{X}(OCH₂CH₂)_{y}OSO₃M** (1)

   wherein:
   R - represents a linear and/or branched hydrocarbon chain with an average carbon content x of between 6 and 16 carbon atoms,
   y - represents the average number of mers in the range of 2.2 to 3.8,
   M - represents a cation capable of forming a water-soluble surface-active agent, the cation being a monovalent or divalent cation,
and mixtures thereof,
a block copolymer in an amount ranging from 0.1 to 20% by weight of the total weight of the composition, selected from the group comprising copolymers with a molecular weight between 500 and 8000 Da of one of the following formulae 2-5: 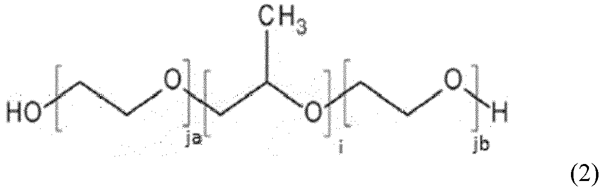 wherein:
   i - is the average number of oxypropylene mers, and
   the sum of ja + jb - represents the average number of oxyethylene mers, 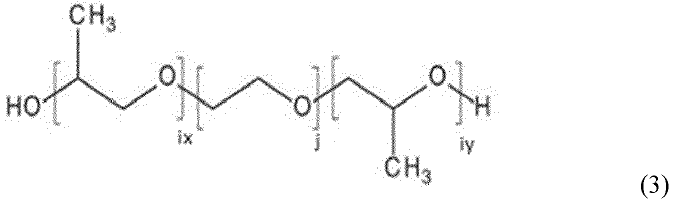
   wherein:
   the sum of ix + iy - represents the average number of oxypropylene mers, and
   j - represents the average number of oxyethylene mers, 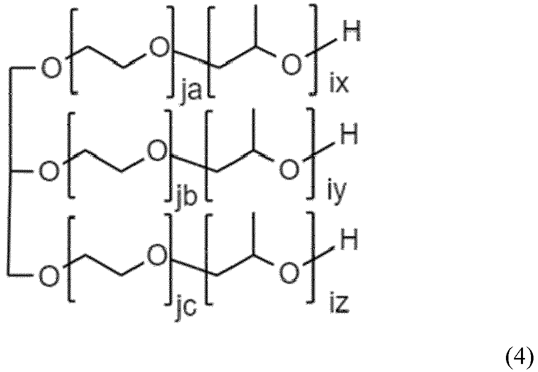 or 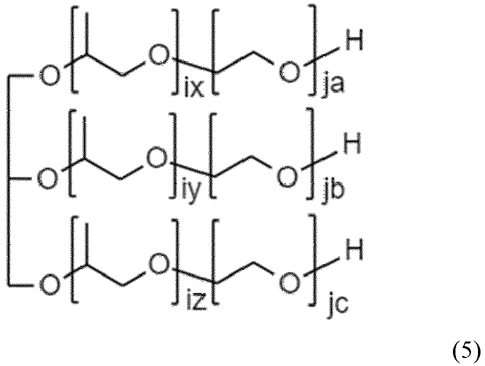
   wherein:
   the sum of ix + iy + iz - represents the average number of oxypropylene mers, and
   the sum of ja + jb + jc - represents the average number of oxyethylene mers,
   and mixtures thereof, and
   at least one glycol in an amount ranging from 10 to 30% by weight of the total weight of the composition, selected from the group comprising alkylene glycols, alkylene glycol ethers and poly(alkylene glycols) and mixtures thereof.

Preferably, R in the composition contains between 8 and 14 carbon atoms.

Preferably, y in the composition is in the range of 2.5 to 3.4.

Preferably, M in the composition is selected from the group comprising sodium, potassium, ammonium, calcium or magnesium cations and combinations thereof.

In a particularly preferred embodiment of the invention, the block copolymer in the composition is a copolymer with a molecular weight of 500 to 5000 Da.

Preferably, the block copolymer in the composition contains at least 10% of ethylene oxide.

Furthermore, the block copolymer is preferably water-soluble.

Preferably, the content of at least one block copolymer in the composition is between 1% and 15% by weight of the total weight of the composition.

Preferably, at least one glycol in the composition is selected from the group comprising ethylene glycol, propylene glycol, hexylene glycol, buthyl-diglycol, butylglycol and mixtures thereof.

Preferably, the concentration of at least one glycol in the composition is between 12% and 25% by weight of the total weight of the composition.

Another object of the invention is a method of manufacturing the above composition. The essence of the method is that the components of the composition are mixed with each other at a temperature not exceeding 40°C until a homogeneous composition is obtained.

Yet another object of the invention is the use of the above composition. The essence of this use is its function as an agent for aerating gypsum-based products such as plasterboards. Preferably, in this use, the composition is dispensed in the form of an aqueous solution with a concentration of 0.1% to 10% by weight.

According to the invention, products containing the composition according to the invention, preferably gypsum-based products such as plasterboard, can be obtained.

### Advantages of the invention

The composition according to the present invention is a modification of a foaming agent dedicated to the aeration of plasterboards by means of semi-stable foam and unstable foam technology. This modification makes it possible to form a unique core structure and significantly simplify the process of aerating plasterboards.

Owing to the high concentration of the surface-active agent of up to 75% by weight in the composition, the foaming efficiency of the composition is increased and it is possible to dose the composition almost twice as low as with a standard foaming agent, which further results in raw material savings.

The foam structure in the foaming composition is significantly affected by the addition of a copolymer with suitably selected chemical characteristics - this addition of a low-foam block copolymer to the foaming agent allows the size of the introduced bubbles to be controlled and allows larger pores to be obtained, while maintaining a small percentage of small pores in the proper proportion. A properly selected block copolymer is a key component of the composition, which, depending on the structure of the introduced copolymer, imparts a unique porous structure.

The increased foaming efficiency also allows the dosage of gypsum to be reduced, which generates further large savings in the raw materials used and not only increases the cost-effectiveness of the process, but also reduces the weight of the obtained plasterboards. This smaller weight has the indirect effect of reducing the load on the building's structural elements.

As a result of using the composition according to the invention, high-grade and low-weight plasterboards are obtained - two characteristics highly desired by manufacturers and customers in the market.

Furthermore, due to the fact that, when using the composition according to the present invention in a plasterboard, a pore size distribution corresponding to that obtained in semi-stable technology can be obtained (see Fig. 1b), it is not necessary to implement a second dosing line for the delivery of a second foaming agent. This results in a much easier implementation of such a foaming agent into production when using a production line not adapted to semi-stable foam technology, i.e. where the production line has only one dosing line. Another advantage of the invention related to the use of the composition in production lines is the low viscosity of the obtained composition, which allows the composition to be efficiently pumped under a lower load of the dosing pumps, which is beneficial in terms of energy consumption and extends the life of the pumps.

The composition according to the invention is stable and resistant to extreme temperatures.

### Brief description of the figures of drawing

The object of the invention in an embodiment is illustrated in the drawing, wherein:
Fig. 1 shows the pore structure in the gypsum core obtained through aeration with: a) a product in unstable foam technology; b) a product in semi-stable foam technology; c) a product in stable foam technology.

### Detailed description of the invention

Whenever small pores are mentioned in this description, the term is intended to cover pores between about 0.1 and about 0.2 mm², while the term large pores is intended to cover pores over about 0.8 mm².

The object of the present invention is a highly-concentrated low-viscosity foaming agent composition dedicated to the aeration of plasterboards. The innovative aspect of the formulation consists in enriching it with an additional key component - a low-foaming, nonionic surface-active agent in the form of a block copolymer, the action of which significantly alters the mechanism of aeration of the plasterboard core by ensuring the proper ratio of small and large pores.

The present foaming agent composition contains a surface-active agent or a mixture of anionic surface-active agents of formula 1:

**R_{X}(OCH₂CH₂)_{y}OSO₃M** (1)

wherein:
R - represents a linear and/or branched hydrocarbon chain with an average carbon content x of between 6 and 16 carbon atoms, preferably between 8 and 14 carbon atoms,
y - represents the average number of mers in the range of 2.2 to 3.8, preferably in the range of about 2.5 to about 3.4,,
M - represents a cation capable of forming a water-soluble surface-active agent, M being a monovalent or divalent cation, M being preferably a sodium, potassium, ammonium, calcium or magnesium cation and/or a combination of these cations.

The content of the surface-active agent or the mixture of surface-active agents is from about 40 to about 75%, more preferably from about 40 to about 60%, even more preferably from about 43 to about 55% by weight relative to the total weight of the composition.

The composition according to the invention also comprises a block copolymer containing ethylene oxygen and propylene oxide units, of one of the following formulae 2-5: 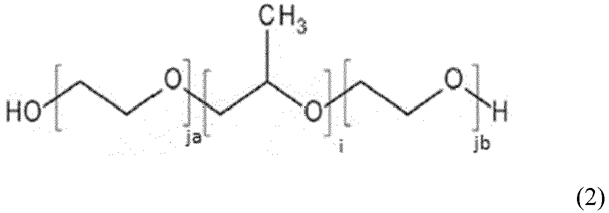 wherein:
i - is the average number of oxypropylene mers, and
the sum of ja + jb - represents the average number of oxyethylene mers, 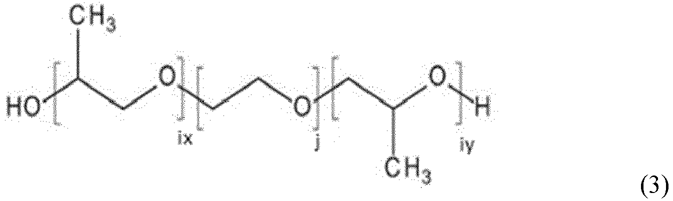 wherein:
   the sum of ix + iy - represents the average number of oxypropylene mers, and
   j - represents the average number of oxyethylene mers, 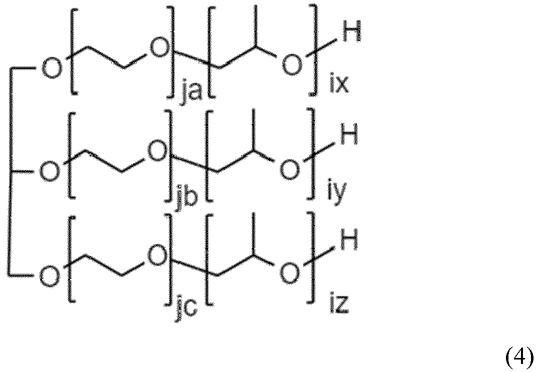
   or 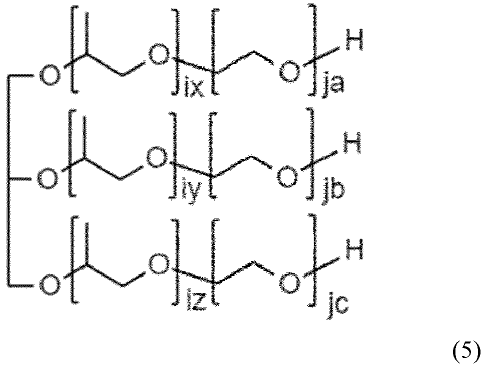
   wherein:
   the sum of ix + iy + iz - represents the average number of oxypropylene mers, and
   the sum of ja + jb + jc - represents the average number of oxyethylene mers,
   or a combination thereof.

The molecular weight of the block copolymer is preferably in the range from about 500 to about 8000 Da, more preferably from about 500 to about 5000 Da, even more preferably from about 1000 to about 4000 Da, even more preferably from about 1500 to about 3000 Da, for example from about 1800 to about 2800 Da.

The block copolymer preferably contains at least 10% by weight of ethylene oxide, such as for example 20% by weight of ethylene oxide or more. A content of less than 10% of ethylene oxide makes the copolymer insoluble in water.

Knowing the molecular weight of the copolymer and the percentage of ethylene oxide, one skilled in the art can easily calculate the propylene oxide content in the copolymer and, as a result, determine all coefficients i and j and reproduce exactly a given copolymer.

According to the research carried out by the inventor, it is possible to achieve the technical effects provided by the invention regardless of the structure of the polymer as long as the condition of a minimum concentration of ethylene oxide of 10 per cent by weight is met.

The structure of the block copolymer should preferably be selected so that it is water-soluble.

The content of the block copolymer in the composition according to the invention is preferably from about 0.1% to about 20% by weight, more preferably from about 1% to about 15% by weight, and even more preferably from about 1% to about 10% by weight relative to the total weight of the composition.

The copolymer content in the composition according to the invention affects the stability of the foam obtained. As a result, by adjusting the concentration of the copolymer, it is possible to alter the properties of the foam to obtain a semi-stable foam or even to obtain properties similar to an unstable foam. The latter properties are quite difficult to obtain because the foam efficiency drops quite considerably as the copolymer has a strong defoaming effect in large quantities.

Glycol is also a component of the composition according to the invention.

According to the invention, the term glycol means a compound selected from the group comprising alkylene glycols, alkylene glycol ethers or polyalkylene glycols and derivatives of these compounds.

Preferably, the glycol is selected from the group comprising ethylene glycol, propylene glycol, hexylene glycol, butyldiglycol, butylglycol or mixtures thereof.

The glycol content in the composition according to the invention is from about 10% to about 30% by weight, for example about 25% by weight relative to the total weight of the composition.

The obtained composition has a viscosity at 20°C in the range of about 20 to about 500 mPa·s, preferably in the range of about 30 to about 250 mPa·s, and a mean bubble area (MBA) after 500 seconds from the moment of foaming in the range of about 220 000 to about 450 000 µm², preferably from about 270 000 to about 400 000 µm².

The term "average number" used to refer to the number of ethylene oxide units, propylene oxide units or carbon atoms for the Rₓ substituent is due to the nature of the components used in the composition according to the invention. Both the block copolymer and the surface-active agent used in the composition according to the present invention are polymeric compounds, so that in practice they are a mixture of polymers of a similar structure, but differing to a certain narrow extent in the content of said units. For this type of components, it is therefore difficult to provide an exact quantitative composition.

Another object of the invention is a method of manufacturing the composition described above. The method of manufacturing comprises introducing the above-mentioned components of the foaming agent composition into a vessel of suitably sized volume, and then mixing them until a homogeneous composition is obtained. Such mixing can be carried out, for example, by means of a mechanical stirrer, such as a mechanical stirrer with an anchor tip. Preferably, the mixing temperature corresponds to room temperature (about 25°C) and the maximum temperature during the manufacturing of the composition must not exceed about 40°C.

The object of the invention is also use of the foaming agent composition in the form of an aqueous solution as an agent for aerating gypsum-based products, for example plasterboards.

Preferably, the content of the composition in the solution used for aeration is between 0.1% and 10% by weight. Preferably, an aqueous solution of the composition is used because a concentrated foaming agent composition as such is not suitable for industrial applications. Therefore, an aqueous solution is used in the production lines, said solution, once produced, is foamed and the obtained foam is dosed into the gypsum core in order to obtain plasterboard.

In the context of the present invention, the term "gypsum-based product" means any product the main component of which is gypsum and which can be manufactured or treated using the composition according to the present invention. Examples of gypsum-based products that fall within the scope of the present invention are gypsum panels, gypsum blocks and, most preferably plasterboards.

Gypsum-based products, such as, among others, plasterboards, can be manufactured by methods known to one skilled in the art, whereby in these methods the composition according to the invention is used as a foaming agent that introduces air bubbles into the gypsum (gypsum core), which consequently allows pore structures to be obtained in the gypsum. The process parameters (e.g. the dosage of the composition according to the invention, rate of delivery thereof, as well as the pore size in the gypsum-based product) are selected by one skilled in the art on the basis of the information contained in the present specification as well as the knowledge generally available to one skilled in the art.

The composition according to the invention will be presented below based on several exemplary embodiments. According to the invention, the word "about" used above and below is to be understood as a deviation of +/- 5% from the specified value, reflecting inaccuracies that may occur in the manufacturing process of the composition according to the invention, e.g. while dosing the components.

### Examples

### Example 1

The composition according to the invention was manufactured as follows:
a) An anionic surface-active agent with a general formula of C₁₀H₂₁(OCH₂CH₂)₃OSO₃NH₄ in an amount of 72% by weight of the total weight of the composition was introduced into a beaker having a volume of 5 1.
b) Propylene glycol was added in an amount of 25% by weight of the total weight of the composition.
c) The block copolymer according to formula 2 with a molecular weight of 3000 Da and an average ethylene oxide content of 20% by weight of the copolymer was added in an amount of 3% by weight of the total weight of the composition.
d) The components were mixed for about 20 minutes at 50 rpm using a mechanical stirrer with an anchor tip.

The above steps were carried out at room temperature (25°C).

**Results:** The added copolymer proved to be completely soluble in the composition and, importantly, did not change its viscosity, which was still below 200 mPa·s at the temperature of 20°C. Tests on foam efficiency carried out with a Krüss DFA100 foam analyser (measuring the total height of the foam after foaming with compressed air) indicated that it was not lower than in the case of the test without any addition of the block copolymer, but that its stability time in the form of water drainage was reduced, which means that the foam would become less stable with time. The structure of the foam changed and contained a higher proportion of air bubbles with an area of more than 0.8 mm² without much change for smaller bubbles of 0.1 to 0.2 mm². Test on foam structure was also carried out with a Krüss DFA100 foam analyser.

### Example 2

The composition according to the invention with a different composition was manufactured as follows:
a) An anionic surface-active agent with a general formula of C₁₀H₂₁(OCH₂CH₂)₃OSO₃NH₄ in an amount of 68% by weight of the total weight of the composition was introduced into a beaker.
b) Ethylene glycol was added in an amount of 25% by weight of the total weight of the composition.
c) The block copolymer according to formula 2 with a molecular weight of 3000 Da and an average ethylene oxide content of 15% by weight of the copolymer was added in an amount of 7% by weight of the total weight of the composition.
d) The components were mixed for about 20 minutes at 50 rpm using a mechanical stirrer with an anchor tip.

The above steps were carried out at room temperature (25°C).

**Results:** The addition in the form of an increased amount of copolymer proved to be soluble in the composition. Tests on foam efficiency indicated that it was lower than in the case of the test without the addition of the block copolymer, and its stability time in the form of faster water drainage was also reduced. The structure of the foam changed and there was a significant increase in the proportion of air bubbles above 0.8 mm² (compared to example 1) and a slight decrease in the number of air bubbles between 0.1 and 0.4 mm². Tests on foam efficiency and on proportion of air bubbles in the foam were carried out similarly to Example 1 with a Krüss DFA100 foam analyser.

### Example 3

The composition according to the invention with a still different composition was manufactured as follows:
a) An anionic surface-active agent with a general formula of C₁₀H₂₁(OCH₂CH₂)₃OSO₃NH₄ in an amount of 72% by weight of the total weight of the composition was introduced into a beaker.
b) Diethylene glycol monobutyl ether was added in an amount of 25% by weight of the total weight of the composition.
c) The block copolymer according to formula 3 with a molecular weight of 2500 Da and an average ethylene oxide content of 12% by weight of the copolymer was added in an amount of 3% by weight of the total weight of the composition.
d) The components were mixed for about 20 minutes at 50 rpm using a mechanical stirrer with an anchor tip.

The above steps were carried out at room temperature (25°C).

**Results:** As in Example 1, the copolymer still remained completely soluble in the composition. Tests on foam efficiency showed that it was comparable to that of the sample without the added copolymer. The block copolymer used had a lower molecular weight and a higher percentage of propylene oxide than the copolymer in Example 1, so the foam stability was lower than in Example 1 and the foam released water faster. The proportion of air bubbles was comparable to Example 2 - there was a slight decrease in the number of the smallest bubbles between 0.1 and 0.4 mm² and an increase in the number of bubbles above 0.8 mm². Tests on foam efficiency and on proportion of air bubbles in the foam were carried out similarly to Example 1 with a Krüss DFA100 foam analyser.

### Example 4

The composition according to the invention with a still different composition was manufactured as follows:
a) An anionic surface-active agent with a general formula of C₁₀H₂₁(OCH₂CH₂)₃OSO₃NH₄ in an amount of 68% by weight of the total weight of the composition was introduced into a beaker.
b) Ethylene glycol was added in an amount of 25% by weight of the total weight of the composition.
c) The block copolymer according to formula 3 with a molecular weight of 2500 Da and an average ethylene oxide content of 10% by weight of the copolymer was added in an amount of 7% by weight of the weight of the composition.
d) The components were mixed for about 20 minutes at 50 rpm using a mechanical stirrer with an anchor tip.

The above steps were carried out at room temperature (25°C).

**Results:** Despite the increased amount, the copolymer remained soluble in the composition, although it required slightly longer mixing time. The viscosity remained in the range below 100 mPa·s at a temperature of 25°C. Tests on foam efficiency showed that it was noticeably lower than in the case of the sample without the added copolymer. The block copolymer used had a lower molecular weight and a higher percentage of propylene oxide, so the foam stability was much lower than in all the examples above. The proportion of bubbles has changed significantly - the number of bubbles with an area between 0.1 and 0.6 mm² has decreased significantly and the proportion of bubbles with an area above 0.8 mm² has increased significantly, and even pores with an area exceeding 2.0 mm² have appeared. Tests on foam efficiency and on proportion of air bubbles in the foam were carried out similarly to Example 1 with a Krüss DFA100 foam analyser.

### Discussion of the results obtained for examples 1-4:

To summarise the above tests, the composition of the block copolymer is extremely important. Such an addition should have an appropriate ratio of ethylene oxide to propylene oxide so that it has the ability to dissolve completely in the composition. The higher the propylene oxide content, the lower the efficiency and the greater the instability of the foam, and the larger the air bubbles which result in larger pores in the plasterboard core. For this reason, the total proportion of the copolymer in the composition should remain relatively small and carefully selected based on its chemical structure.

### Example 5

The composition according to the invention with a still different composition was manufactured as follows:
a) An anionic surface-active agent with a general formula of C₁₀H₂₁(OCH₂CH₂)₃OSO₃NH₄ in an amount of 72% by weight of the total weight of the composition was introduced into a beaker.
b) Propylene glycol was added in an amount of 25% by weight of the total weight of the composition.
c) The block copolymer according to formula 4 with a molecular weight of 3100 Da and an average ethylene oxide content of 20% by weight of the copolymer was added in an amount of 3% by weight of the total weight of the composition.
d) The components were mixed for about 20 minutes at 50 rpm using a mechanical stirrer with an anchor tip.

The above steps were carried out at room temperature (25°C).

**Results:** A copolymer with similar parameters to Example 1, similar molecular weight and the same percentage of ethylene oxide by weight, but with a different glycerine-based structure, was used. The added copolymer proved to be completely soluble in the composition and did not change its viscosity, which was still below 200 mPa·s at a temperature of 20°C. Tests on foam efficiency carried out with a Krüss DFA100 foam analyser (which measures the total foam height after foaming with compressed air) indicated surprising results, the foam height was not reduced and, particularly importantly, the addition did not affect the foam drainage time. In turn, the foam structure changed and contained a higher proportion of air bubbles with an area of more than 0.8 mm² without much change for smaller bubbles of 0.1 to 0.2 mm². Test on foam structure was also carried out with a Krüss DFA100 foam analyser.

### Example 6

The composition according to the invention with a still different composition was manufactured as follows:
a) An anionic surface-active agent with a general formula of C₁₀H₂₁(OCH₂CH₂)₃OSO₃NH₄ in an amount of 72% by weight of the total weight of the composition was introduced into a beaker.
b) Propylene glycol was added in an amount of 25% by weight of the total weight of the composition.
c) The block copolymer according to formula 5 with a molecular weight of 2700 Da and an average ethylene oxide content of 15% by weight of the copolymer was added in an amount of 3% by weight of the total weight of the composition.
d) The components were mixed for about 20 minutes at 50 rpm using a mechanical stirrer with an anchor tip.

The above steps were carried out at room temperature (25°C).

**Results:** The added glycerine-based copolymer proved to be completely soluble in the composition and did not change its viscosity at a temperature of 20°C. Tests on foam efficiency carried out with a DFA100 Krüss foam analyser (which measures the total foam height after foaming with compressed air) still indicated very interesting results, the foam height was not reduced despite the relatively low ethylene oxide content in the glycerine-based copolymer, and the drainage time fell within the limits of measurement error, which is particularly important. The foam structure changed and contained a higher proportion of air bubbles with an area of more than 0.8 mm² and the proportion of smaller bubbles between 0.1 and 0.4 mm² has decreased. Test on foam structure was carried out with a Krüss DFA100 foam analyser.

### Discussion of the results obtained for examples 5-6:

Glycerine-based block copolymers gave excellent results. In contrast to the copolymers of formula 2 and 3, no change in foam efficiency was observed while allowing significant changes in bubble structure by increasing their size. This means that the foam structure can be controlled surprisingly freely by selecting the structure of the glycerine-based copolymer.

The properties of the foams obtained in the above examples (foam stability, foam height and air bubble size) indicate that the composition according to the invention solves the technical problems discussed above and makes it possible to manufacture gypsum-based products such as plasterboard.

## Claims

1. A foaming agent composition comprising at least one surface-active agent and at least one glycol, **characterised in that** it comprises
at least one surface-active agent in an amount ranging from 40 to 75% by weight of the total weight of the composition, selected from the group comprising anionic surface-active agents of formula 1:
**R_{X}(OCH₂CH₂)_{y}OSO₃M** (1)
wherein:
R - represents a linear and/or branched hydrocarbon chain with an average carbon content
x of between 6 and 16 carbon atoms,
y - represents the average number of mers in the range of 2.2 to 3.8,
M - represents a cation capable of forming a water-soluble surface-active agent, the cation being a monovalent or divalent cation,
and mixtures thereof,
at least one block copolymer in an amount ranging from 0.1 to 20% by weight of the total weight of the composition, selected from the group comprising copolymers with a molecular weight between 500 and 8000 Da of one of the following formulae 2-5: 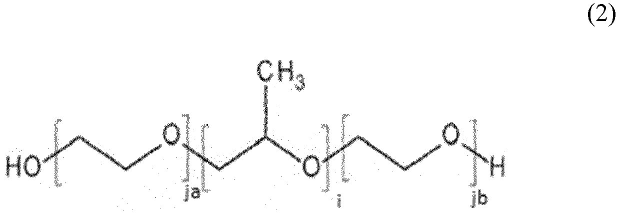 wherein:
i - is the average number of oxypropylene mers, and
the sum of ja + jb - represents the average number of oxyethylene mers, 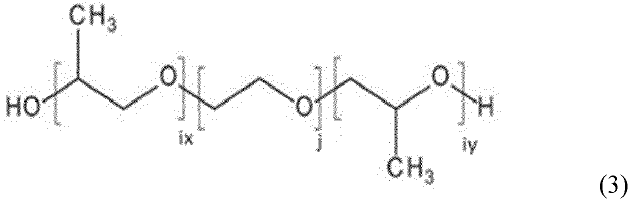
wherein:
the sum of ix + iy - represents the average number of oxypropylene mers, and
j - represents the average number of oxyethylene mers, 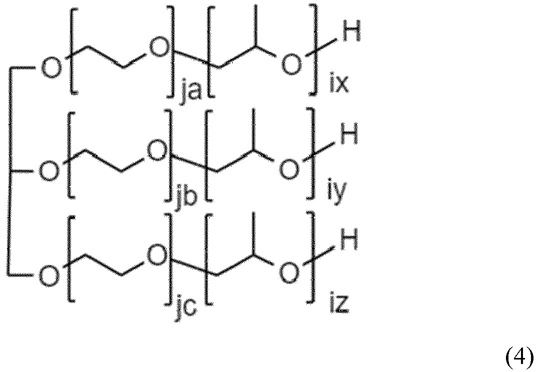 or 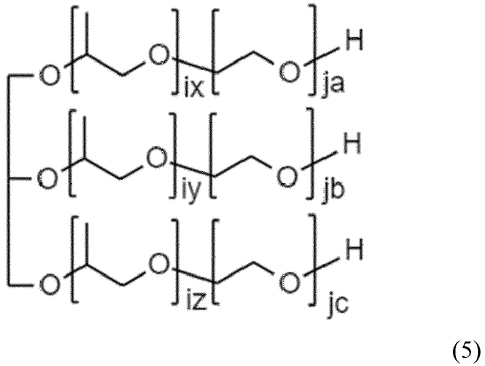
wherein:
the sum of ix + iy + iz - represents the average number of oxypropylene mers, and
the sum of ja + jb + jc - represents the average number of oxyethylene mers,
and mixtures thereof, and
at least one glycol in an amount ranging from 10 to 30% by weight of the total weight of the composition, selected from the group comprising alkylene glycols, alkylene glycol ethers and poly(alkylene glycols) and mixtures thereof.

2. The composition according to claim 1, **characterised in that** R comprises from 8 to 14 carbon atoms.

3. The composition according to claim 1 or 2, **characterised in that** y is in the range from 2.5 to 3.4.

4. The composition according to any one of claims 1-3, **characterised in that** M is selected from the group comprising sodium, potassium, ammonium, calcium or magnesium cation and combinations thereof.

5. The composition according to any one of claims 1-4, **characterised in that** the block copolymer is a copolymer having a molecular weight of 500 to 5000 Da.

6. The composition according to any one of claims 1-5, **characterised in that** the block copolymer contains at least 10% of ethylene oxide.

7. The composition according to any one of claims 1-6, **characterised in that** the block copolymer is soluble in water.

8. The composition according to any one of claims 1-7, **characterised in that** the content of at least one block copolymer in the composition is between 1% and 15% by weight of the total weight of the composition.

9. The composition according to any one of claims 1-8, **characterised in that** at least one glycol or compound of the ether glycol family is selected from the group comprising ethylene glycol, propylene glycol, hexylene glycol, butyldiglycol, butylglycol and mixtures thereof.

10. The composition according to any one of claims 1-9, **characterised in that** the content of at least one glycol in the composition is between 12% and 25% by weight of the total weight of the composition.

11. A method of manufacturing the composition as defined in any one of claims 1-10, **characterised in that** the components of the composition are mixed with each other at a temperature not exceeding 40°C until a homogeneous composition as defined in claim 1 is obtained.

12. Use of the composition as defined in any of claims 1-10 as an agent for aerating gypsum-based products such as plasterboard.

13. The use according to claim 12, **characterised in that** the composition is used in the form of an aqueous solution with a concentration of 0.1% to 10% by weight.
